# EUROPÄISCHE PATENTANMELDUNG

(11) **EP 2 617 487 A1**
(43) Veröffentlichungstag der Anmeldung: **24.07.2013**
(21) Anmeldenummer: 13401001.6
(22) Anmeldetag: 08.01.2013
(51) Int. Cl.: B01J 19/00

(54) **Mikroreaktor für katalytische Reaktionen**

(30) Priorität: 17.01.2012 DE 102012100344
(71) Anmelder: Karlsruher Institut für Technologie, 76131 Karlsruhe (DE)
(72) Erfinder: Dittmeyer, Roland, 76133 Karlsruhe (DE); Pfeifer, Peter, 76351 Linkenheim-Hochstetten (DE); Schubert, Klaus, 76227 Karlsruhe (DE)

(57) **Zusammenfassung**

Mikroreaktor zur Durchführung mindestens einer katalytischen Reaktion zwischen je zwei oder mehr Reaktanten, umfassend mindestens eine serielle Anordnung eines Einspeisungsmoduls **(Ex),** eines Reaktionsmoduls **(Rx)** sowie eines Temperierungsmoduls **(Tx)** mit Temperierungsmitteln **(TFx)** in der genannten Reihenfolge. Die Aufgabe liegt darin, einen Mikroreaktor mit erhöhter Wirtschaftlichkeit vorzuschlagen. Die Aufgabe wird dadurch gelöst, dass mindestens eine erste Passagenfraktion **(6)** mit einer Vielzahl paralleler Kanälen für eine erste Fluidfraktion vorgesehen ist, die jedes Einspeise- und Temperierungsmodul **(Ex** bzw. **Tx)** durchdringt, mindestens eine zweite Passagenfraktion mit Kanälen für mindestens eine zweite Fluidfraktion **(8)** vorgesehen ist, die im Einspeisemodul in die erste Passagenfraktion ausmündet oder abzweigt sowie das Reaktionsmodul als separates Modul und Träger für einen Katalysator als Einschub in den Mikroreaktor gestaltet ist.

## Beschreibung

Die Erfindung betrifft einen Mikroreaktor für die Durchführung von katalytischen Reaktionen gemäß des ersten Patentanspruchs.

Mikroreaktoren für die eingangs genannte Verwendung sind bereits in verschiedenen Ausführungen realisiert worden und werden bereits in der Mikroverfahrenstechnik für bestimmte Reaktionen kommerziell eingesetzt. Die Auslegung erfolgt unter der speziellen Berücksichtigung mikrotechnischer Randbedingungen. Ein Mikroreaktor umfasst mindestens eine Reaktionszone mit mindestens einem Einlauf und mindestens einem Ablauf. In den Reaktionszonen erfolgen kontrollierte Reaktionen, wobei in mindestens einer Reaktionszone ein Katalysator zum Einsatz kommt. Grundsätzlich sind die Reaktionszonen als Mischkammern oder als Durchflusskavitäten ohne Fluidstromzusammenführungen und/oder -aufzweigungen gestaltbar.

Beispielhaft ist in DE 10 2005 022 958 B3 ein Mikroreaktor mit schichtweisem Aufbau für katalytische Reaktionen beschrieben. In diesem ist ein sich flächig erstreckendes mikrostrukturiertes und temperiertes Reaktionsvolumen mit einer Katalysatorschüttung gefüllt. Die Zuführung eines Eduktes erfolgt über eine Vielzahl von Zuläufen über die gesamte Erstreckung. Erfüllt der Katalysator nicht mehr oder nur noch ungenügend seine Aufgabe, muss er aufwendig ausgetauscht und/oder zeitintensiv regeneriert werden.

Ein weiteres Beispiel offenbart die DE 100 44 526 A1**.** Anstelle einer Katalysatorschüttung kommt bei dieser Ausführung eine wandungsseitige Katalysatorbelegung in den Reaktionsvolumina zum Einsatz. Ein selektiver Austausch des Katalysators ist bei dieser Ausführungsform praktisch nicht möglich.

Die vorgenannten Ausführungen repräsentieren jeweils einen schichtweisen Aufbau eines Mikrostrukturreaktors. Dabei erfolgt das Einbringen eines zweiten Reaktanden in die Reaktion in vorteilhafter Weise über eine Vielzahl von Einleitungen über die gesamte Erstreckung der Reaktionsvolumina. Die Zuleitungskanalstrukturen und die Reaktionsvolumina sind dabei vorzugsweise schichtweise in abwechselnder Reihenfolge angeordnet.

Die Kanäle werden dabei in Folien oder Platten eingearbeitet und sind bei einer anschließenden Fügung durch Diffusionsschweißen oder Diffusionslöten zu einem Folien- oder Plattenstapel einer thermischen Belastung ausgesetzt.

Wegen der thermischen Belastung wird der Katalysator erst nachträglich in die Reaktionsvolumina eingebracht. Nachteilig ist dabei, dass die Reaktionskanäle und -volumina über ihre gesamte Erstreckung zuverlässig nur mit einem Katalysator befüll- oder beschichtbar sind. Eine Teilbeschichtung oder eine serielle Beschichtung mit verschiedenen Katalysatoren ist aufgrund der Miniaturisierung mit vertretbarem Aufwand nicht möglich.

Auch eine Regenerierung oder ein selektiver Austausch des Katalysators ist bei den vorgenannten Ausführungsformen oft unwirtschaftlich, sodass bei einer nachlassenden Katalysatorwirkung der gesamte Mikrostrukturapparat unbrauchbar wird.

Folglich liegt die **Aufgabe der Erfindung** darin, einen Mikroreaktor mit erhöhter Wirtschaftlichkeit vorzuschlagen, der insbesondere die vorgenannten Nachteile und Einschränkungen nicht aufweist.

Die Aufgabe wird durch einen Mikroreaktor mit den Merkmalen des Anspruchs 1 gelöst. Die auf diesen rückbezogenen Unteransprüche geben vorteilhafte Ausgestaltungen wieder.

Der Grundgedanke der Erfindung liegt darin, einen Mikroreaktor zur Durchführung mindestens einer katalytischen Reaktion zwischen je zwei oder mehr Reaktanten vorzuschlagen, bei dem die Reaktionsvolumina als separate Komponenten, den Reaktionsmodulen entnehmbar und damit austauschbar sind. Der Mikroreaktor umfasst mindestens eine serielle Anordnung eines Einspeisungsmoduls, eines der vorgenannten Reaktionsmodule sowie eines Temperierungsmoduls mit Temperierungsmitteln in der genannten Reihenfolge. Das Einspeisungsmodul dient der Zusammenführung der Reaktanten vor der Reaktion im Reaktionsmodul, das Temperierungsmodul der Temperierung nach der Reaktion im Reaktionsmodul. Dabei wirken die Temperierungsmittel optional in das jeweils vorgeschaltete, d.h. benachbarte Reaktionsmodul mit ein.

Im Mikroreaktor sind folglich Teilvolumina für die Temperierung eines Ausgangsstoffes (Eduktes) oder Eduktgemisches bzw. eines Reaktionsgemisches, Teilvolumina für das Hinzuspeisen weiterer Edukte sowie Teilvolumina für die katalytisch unterstützte chemische Reaktion oder Reaktionsschritte vorgesehen. Die Teilvolumina eines Reaktionsmoduls bilden ein Reaktionsvolumen. Bezogen auf der Reaktionsablauffolge sind die genannten Komponenten abwechselnd hintereinander, d.h. in Reihe angeordnet.

Der Mikroreaktor weist mehrere Passagenfraktionen mit Kanälen als Teilvolumina auf. Die Kanäle sind vorzugsweise als Mikrokanäle mit einem bevorzugten Strömungsquerschnitt unter 1mm² gestaltet.

Mindestens eine erste Passagenfraktion ist mit einer Vielzahl paralleler Kanälen für eine erste Fluidfraktion vorgesehen. Die parallel zueinander angeordneten und durchfließbaren Kanäle sind vorzugsweise geometrisch identisch gestaltet und weisen bevorzugt in jedem Modul, das sie durchdringen, untereinander die gleichen Rahmenbedingungen wie z.B. Temperaturniveau und/oder eine gleiche Anzahl von Hinzuspeisungen auf. Damit wird ein möglichst gleicher Durchfluss in allen parallel geschalteten Kanälen erzielt. Die erste Passagefraktion durchdringt jedes Einspeise- und Temperierungsmodul und geht in das Teilvolumen oder die Teilvolumina des Reaktionsmoduls über. Die Teilvolumina, d.h. das Reaktionsvolumen des Reaktionsmoduls münden bzw. mündet wiederum in eine nachfolgende erste Passagefraktion des nachfolgenden Temperierungsmoduls ein. Von dort erfolgt entweder eine Ableitung des Reaktionsproduktes aus dem Mikroreaktor oder eine Weiterleitung des Reaktionsgemisches als eine weitere erste Fluidfraktion durch ein nachfolgendes Einspeisemodul in ein weiteres nachfolgendes Reaktionsmodul.

Für den Fall, dass das Reaktionsvolumen mit einer Katalysator-Partikelschüttung gefüllt und die Partikelschüttung lose, d.h. nicht durch geeignete Mittel wie z.B. mittels eines Drahtgewebes begrenzt ist, werden für die erste Passagenfraktion bevorzugt Strömungsquerschnitte für die Kanäle ausgewählt, die ein Eindringen von Katalysatorpartikeln nicht ermöglicht. Bei einer bevorzugten Katalysatorpartikelgröße zwischen 50 und 250µm sind bevorzugt Kanalquerschnitte zu wählen, z.B. spaltförmige Kanäle mit lichten Spaltbreiten kleiner der genannten Partikelgrößen.

Ferner umfasst der Mikroreaktor mindestens eine zweite Passagenfraktion mit Kanälen für mindestens eine zweite Fluidfraktion. Sie dient der Hinzuführung mindestens eines zweiten Edukts zu den Einleitungen in die ersten Passagefraktionen im Einspeisemodul. Die Einspeisung erfolgt in definierten Teilmengenströmen in den bevorzugt mehreren Einspeisemoduln entlang des Reaktionsweges, wodurch die Einstellung eines gewünschten Konzentrationsprofils oder die serielle Einspeisung entlang des Reaktionsweges, d.h. der ersten Passagefraktion möglich ist. In vorteilhafter Weise lassen sich im Mikroreaktor so mehrstufige Synthesen realisieren.

Vorzugsweise ist der Mikroreaktor in Schichtbauweise mit einem geschichteten Stapel Folien oder Platten gefertigt, wobei die ersten und zweiten Passagenfraktionen in jeweils eigenen Ebenen, d.h. Platten oder Folien angeordnet bzw. eingearbeitet sind. Vorzugsweise kreuzen sich die Kanäle von erster und zweiter Passagefraktion, wobei in den Kreuzungsbereichen Übertrittsöffnungen eine fluidische Verbindung zwischen den Kanälen der beiden Passagefraktionen bilden. Über diese Übertrittsöffnungen erfolgt eine Zusammenführung der Reaktanten, d.h. eine Einleitung mindestens einer zweiten Fluidfraktion als Edukte in die erste Passagefraktion. Vorzugsweise enden die Kanäle der zweiten Passagefraktion im Mikroreaktor und weisen nur einen Anschluss für die Zuspeisung des Edukts auf, während eine Ableitung über die Übertrittsöffnungen gewährleistet ist.

Eine Ausführungsform sieht vor, Kanäle der zweiten Passagefraktion in einem Einspeisungsmodul für die Zuspeisung von mehr als einem Edukt vorzusehen. Dies erfolgt vorzugsweise damit, dass die Zuspeisung von beiden an die erste Passagefraktion angrenzenden Ebenen erfolgt.

Vorzugsweise sind die Temperierungsmodulen in den vorgenannten Stapel von Folien oder Platten mit integriert. Durch diese wird das Eduktgemisch oder das Reaktionsgemisch in der ersten Passagefraktion auf die Temperatur gebracht, die für die in den jeweils folgenden Reaktionsvolumina oder -teilvolumina ablaufenden katalytischen Reaktionen bzw. Teilreaktionen optimal sind. Längs des Reaktionsweges kann ein definiertes Temperaturprofil aufgeprägt werden.

Eine Ausführung sieht eine fluidische Temperierung der ersten Passagefraktionen im Kreuzstromprinzip vor, wobei die hierfür erforderlichen Temperierungskanäle vorzugsweise in die jeweiligen Folien oder Platten der zweiten Passagefraktion mit eingearbeitet sind. Als Temperieungsmittel dienen vorzugsweise Wärmeübertragungsmittel wie Öl Gas oder Wasser. Die Temperierungskanäle sind dabei bevorzugt parallel zu den Kanälen der zweiten Passagefraktion angeordnet. Dabei sind sie bevorzugt als Durchgangskanäle gestaltet, d.h. sie weisen an beiden Seiten des Mikroreaktors Anschlüsse für einen Temperierungskreislauf auf.

Eine Ausführungsform sieht vor, einen Teil oder alle der Temperierungskanäle und der Kanäle der zweiten Passagefraktion sowohl für eine Einspeisung von Edukten oder Reaktanten in die erste Passagefraktion als auch zur Temperierung zu nutzen. Die Kanäle, die für diese Mischnutzung vorgesehen sind, weisen nicht nur Übertrittsöffnungen zu den Kanälen der ersten Passagefraktion auf, sondern sind bevorzugt auch als Durchgangskanäle der vorgenannten Art gestaltet. Die Regelung der Einspeisung der Edukte in die erste Passagefraktion erfolgt vorzugsweise differenzdruckgesteuert.

Die erste Fluidfraktion wird vor Einleitung in ein erstes Reaktionsmodul durch ein Eduktgemisch gebildet. Es verlässt das erste Reaktionsmodul als Reaktionsgemisch, für den Fall, dass noch weitere Reaktionen folgen als Zwischenreaktionsgemisch und wird erst nach Verlassen des letzten Reaktionsvolumens zum Produktgemisch (Reaktionsgemisch).

Die genannten Edukte, Eduktgemische sowie Reaktionsgemische sind in den Mikrostrukturen des Mikroreaktors fließfähige Stoffe, vorzugsweise Fluide Gase, Flüssigkeiten oder Gas-Flüssigkeitsgemische (Arbeitsfluide).

Eine bevorzugte Ausführung sieht vor, die Reaktionsvolumina mindestens eines Reaktionsmoduls zu einer gemeinsamen nach außen hin abgeschlossenen Reaktionsmischkammer zusammenzulegen. Die gesamte erste Passagenfraktion mündet aus dem vorgeschalteten Einspeisungsmodul direkt in die Reaktionsmischkammer ein, um aus dieser wieder in eine Fortführung der ersten Passagenfraktion im nachfolgenden Temperierungsmodul auszumünden. Die Reaktionsvolumina sind vorzugsweise mit Katalysatorpartikel, Katalysatordrahtgewebe, katalytisch aktiven Mikrostrukturen oder Schäumen oder anderen katalytisch aktiven Elementen mit großer spezifischer Oberfläche gefüllt und/oder weisen Wandungen aus einem Katalysatormaterial auf (beschichtet oder gesamtes Modul aus Katalysatormaterial gefertigt). Alternativ lassen sich auch beheizbare Drahtwendeln oder Heizelemente aus einem katalytisch wirkenden Material einsetzen (zusätzliche Heizung zur Steuerung der Reaktion). Dabei ist entweder das Modul mit der Reaktionsmischkammer als Einschub in den Mikroreaktor oder die Reaktionsmischkammer als für einen Katalysatoraustausch und/oder Reinigung reversibel hermetisch verschießbare Kavität im Mikroreaktor gestaltet. In vorteilhafter Weise kommt es wie bei den im zitierten Stand der Technik genannten Reaktionsmischkammern zu einer flächigen Einleitung eines Eduktgemisches in die Reaktionsmischkammer sowie zu einer Vermischung in dieser. Damit einher geht eine Homogenisierung des Eduktgemisches sowie des Reaktionsgemisches und damit ein Ausgleich möglicher verschiedener Konzentrationen oder Strömungsgeschwindigkeiten aufgrund abweichender Mischungsverhältnisse in einzelnen Kanälen aufgrund von Fertigungsungenauigkeiten oder allmählicher Verstopfung insbesondere der Durchtrittsöffnungen im Bereich der Einspeisemodulen.

Bei letztgenannter Ausführung erstreckt sich die erste Passagenfraktion grundsätzlich mit gleichbleibender Kanalanzahl und/oder Durchströmungsquerschnitt durch alle Einspeise- und Temperierungsmodulen. Ändert sich jedoch die Viskosität oder ggf. ein Feststoffanteil durch eine Reaktion in einer Reaktionsmischkammer, ist ein gleich bleibender oder ein bestimmter Durchströmungswiderstand in den nachfolgenden Modulen durch Auslegung z.B. mit abweichender Kanalzahl und/oder Durchströmungsquerschnitt einstellbar.

Mindestens ein Reaktionsmodul weist im Rahmen einer bevorzugten Ausgestaltung über sein gesamtes Volumen direkte Wärmeüberleitungen zu einer Temperierung auf. Die direkten Wärmeüberleitungen umfassen vorzugsweise ein gut wärmeleitendes Material der Komponenten im Reaktionsmodul und/oder eine kurze Wärmeübertragungslänge in der Katalysatorzone (z.B. durch zusammenhängende Katalysatorstrukturen und/oder Partikelkontakte), das die entstehende Wärme im gesamten Reaktionsvolumen des Reaktionsmoduls aufnehmen und direkt zu benachbarten Temperierungen weiterleitet. Eine sich im Reaktionsvolumen bildende Wärme wird durch die genannten Wärmeüberleitungen umgehend an außerhalb des Reaktionsmoduls angeordnete Temperierungen weitergeleitet. Dies ermöglicht eine effektive Temperaturführung und Temperatureinhaltung (z.B. +/- 5°C) im gesamten Reaktionsvolumen.

Eine weitere Ausführung sieht vor, mindestens ein Reaktionsmodul in zwei oder mehrere hintereinandergeschaltete und durchströmbare Teilmodule zu unterteilen. Vorzugsweise sind die Teilmodule Träger jeweils eines eigenen Katalysators. Damit lässt sich in vorteilhafter Weise eine Reaktion innerhalb eines Reaktionsmoduls erst unter Einwirkung eines ersten Katalysators starten und anschließend unter Einwirkung des selben oder eines anderen zweiten Katalysators (z.B. Reaktionsbremse) steuern und kontrollieren. Die Teilmodule werden bevorzugt als jeweils eigenständige Einschübe gestaltet und umfassen eine Reaktionsmischkammer und/oder eine auf sie erstreckende erste Passagenfraktion in vorgenannter Weise. In einem Reaktionsmodul sind somit beide genannten Ausführungen des Reaktionsvolumens miteinander kombinierbar.

Die vorgenannten Ausführungen mit zwei oder mehrere hintereinandergeschaltete und durchströmbare Teilmodule lohnen sich insbesondere für zwei- oder mehrstufige Synthesen wie z.B. eine Fischer-Tropsch-Synthese in Kombination mit einem Hydrocracking zur Erzeugung von Brennstoffen oder der direkten Dimethylsynthese, in der Methanol als Intermediat auftritt. Auch für Gas-Flüssig-Systeme sind diese gestuften Anordnungen mit mehreren hintereinandergeschaltete und durchströmbare Teilmodule interessant, da die Gaszufuhr sequenziell erfolgten kann und so das benötigte Reaktionsvolumen verringert werden kann. Anwendungsbeispiele sind ferner Selektivhydrierungen oder PrOx-Reaktion (Präferenzielle Oxidation), d.h. eine selektive Oxidation von CO in Gegenwart von H₂. So kann der Belegungsgrad des Katalysators mit Reaktionskomponenten in jedem Teilmodul beeinflusst und damit die Selektivität gesteuert werden.

Durch Befüllen mehrerer Reaktionsvolumina oder -teilvolumina mit einem Katalysator unterschiedlicher Aktivität kann entlang der Reaktionsachse ein für die Reaktion gewünschtes Aktivitätsprofil eingestellt werden. Die Reaktionsvolumina oder -teilvolumina des Mikroreaktors werden optional jeweils mit unterschiedlichen Katalysatoren ausgestattet werden, die jeweils einen Reaktionsschritt einer mehrstufigen Synthese katalysieren, ggf. unter Hinzuspeisung eines für einen Reaktionsschritt erforderlichen Edukts in den Einspeisemodulen. Es ist dabei von Vorteil, dass gefährliche wie z.B. toxische oder leicht brennbare Zwischenprodukte, die bei einer mehrstufigen Synthese als Reaktionszwischenprodukte entstehen, unmittelbar in den weiteren Reaktionsschritten zum endgültigen und den Mikroreaktor verlassenden Reaktionsprodukt weiterverarbeitet werden.

Die Erfindung wird im Folgenden anhand von Ausführungsbeispielen erläutert, die optional auch mit einzelnen oder allen vorgenannten Maßnahmen zusätzlich kombinierbar oder erweiterbar sind. Es zeigen
**Fig.1** die prinzipielle Anordnung der Temperierungsmodule **Tₓ**, der Einspeisemodule **Eₓ** und der Reaktionsmodule **Rₓ** im Mikroreaktor einer Ausführungsform,
**Fig.2a** **bis c** prinzipielle Schnittteilansichten von Temperierungsmodulen, Einspeisemodulen und Reaktionsmodulen zweier Ausführungsformen in Schichtbauweise,
**Fig.3** eine perspektivische Teilschnittansicht einer entsprechend der in **Fig.2a** gezeigten Ausführungsform,
**Fig.4** eine mögliche perspektivische Außenansicht eines Mikroreaktors sowie
**Fig.5** ein optionales Abzugsmodul zum Abzweigen von schädlichen Nebenprodukten aus der ersten Passagefraktion oder von Teil-Produktmengen aus dem Reaktionsgemisch.

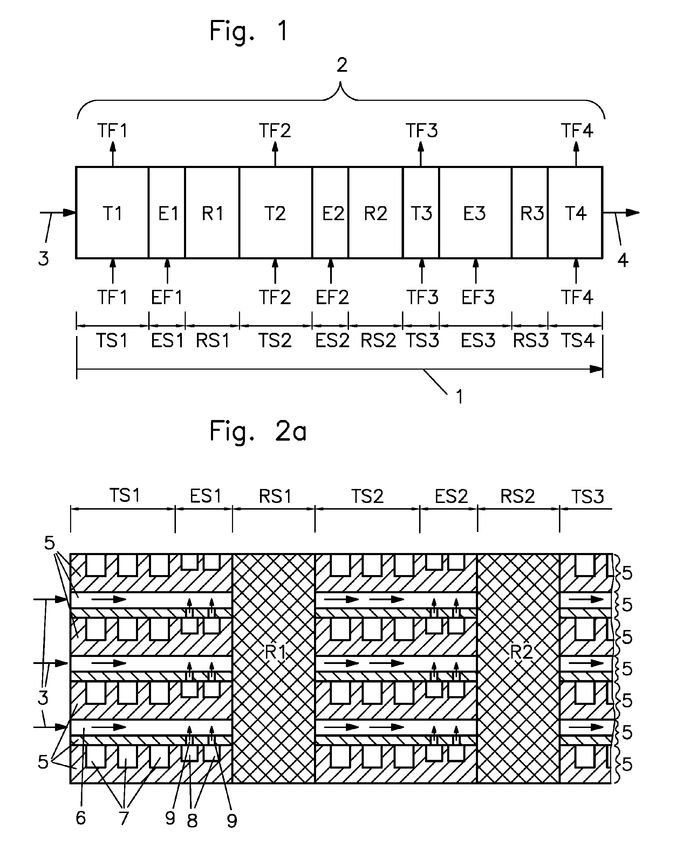

Wie in **Fig.1** dargestellt, umfasst ein Mikroreaktor **2** der beanspruchten Art eine Reihenschaltung von Einspeisemodulen **Eₓ,** Reaktionsmodulen **Rₓ** und Temperierungsmodulen **Tₓ** in Richtung einer Reaktionsachse 1 in der genannten Reihenfolge. Im Beispiel sind drei der genannten Modulfolgen **(E1-R1-T2, E2-R2-T3** und **E3-R3-T4)** hintereinander geschaltet. Ferner gibt **Fig.1** die Fluidströme wieder, die den Mikroreaktor **2** verlassen oder in diesen einströmen. Ein Eduktstrom **3** tritt zunächst in ein erstes Temperierungsmodul **T1** ein und wird in diesem durch ein Temperierungsmittel **TF1** im Querstrom temperiert. In der anschließenden ersten Modulfolge **(E1-R1-T2)** erfolgt zunächst eine Hinzudosierung eines zweiten Eduktes **EF1** im ersten Einspeisungsmodul **E1,** gefolgt von einer Reaktion im mit mindestens einem Katalysator gefüllten Reaktionsmodul **R1** zu einem ersten Reaktionsprodukt, das wiederum anschließend im zweiten Temperierungmodul **T2** durch das Temperierungsmittel **TF2** auf eine vorgegeben Temperatur temperiert, d.h. erhöht oder erniedrigt wird und der zweiten Modulfolge **(E2-R2-T3)** zugeführt wird. Es erfolgt eine Wiederholung der genannten Modulfolge bis zum Durchlauf eines letzten Temperierungsmoduls, im Beispiel **T4** und einem anschließenden Verlassen des Mikroreaktors **2** als Reaktionsproduktstrom **4.**

Die zweiten Edukte **EF1, EF2** und **EF3** werden in den jeweiligen Einspeisemodulen **E1, E2** bzw. **E3** in die erste Passagenfraktion eingespeist; deren Zusammensetzung und Mengenstrom richtet sich nach der jeweils nachfolgenden Teilreaktion in den Reaktionsmodulen **R1, R2** bzw. **R3.**

Ebenso werden die vorzugsweise flüssigen Temperierungsmittel **TF1, TF2, TF3** und **TF4** sowie deren Mengenströme individuell auf die jeweilig ab- oder zuzuführende Kühlleistung oder Wärmeleistung sowie auf das Temperaturniveau in den Temperierungsmodulen **T2, T3** bzw. **T4** (vorzugsweise Kreuzstromwärmetauscher) ausgelegt. Vorzugsweise kommen bei Temperaturen unter 100°C Kühlmittel auf Wasserbasis zum Einsatz, während Temperierungsöle Temperaturbereiche bis ca. 300°C abdecken. Bei deutlich darüber liegenden Temperaturen eignen sich insbesondere Hochdruckdampf oder flüssige Metalle wie z.B. Natrium.

Die flüssigen Temperierungmittel durchlaufen die Temperierung vorzugsweise in einer Ausführung im Rahmen eines geschlossenen Temperierungsmittelkreislaufs vorzugsweise ohne einen Phasenübergang. In einer anderen Ausführung sind dagegen hohe Kühlleistungen und oder geringe Temperaturänderungen im Temperierungsmittel zwingend erforderlich, was vorzugsweise durch einen Phasenübergang des Temperierungsmittel bei der Temperierung realisierbar ist (z.B. Verdampfungskühler). Da damit die Realisierung eines geschlossenen Temperierungsmittelkreislaufs signifikant erschwert wird, durchläuft das Temperierungsmittel vorzugsweise nur einmal eine Temperierung und verlässt das Temperierungsmodul.

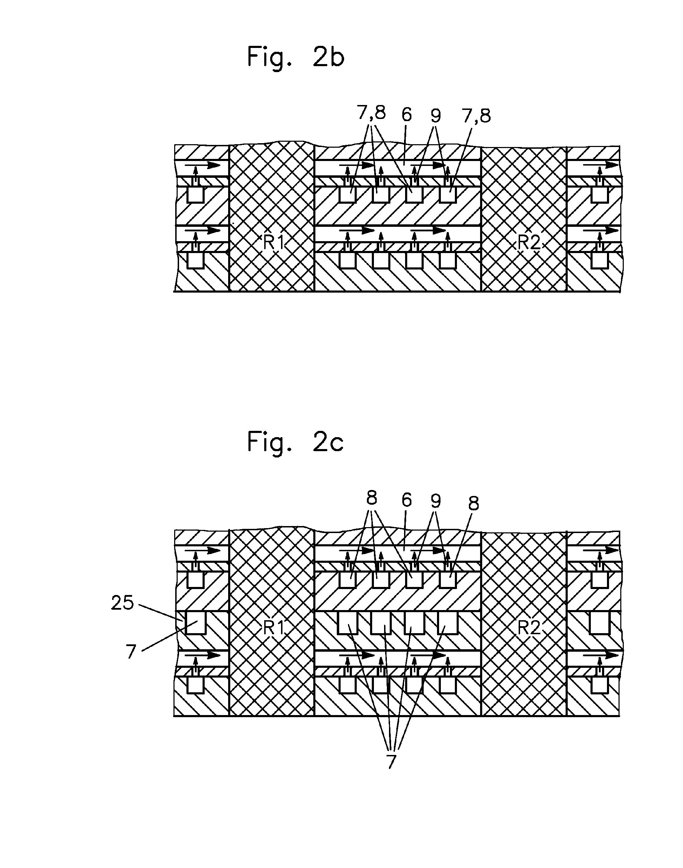

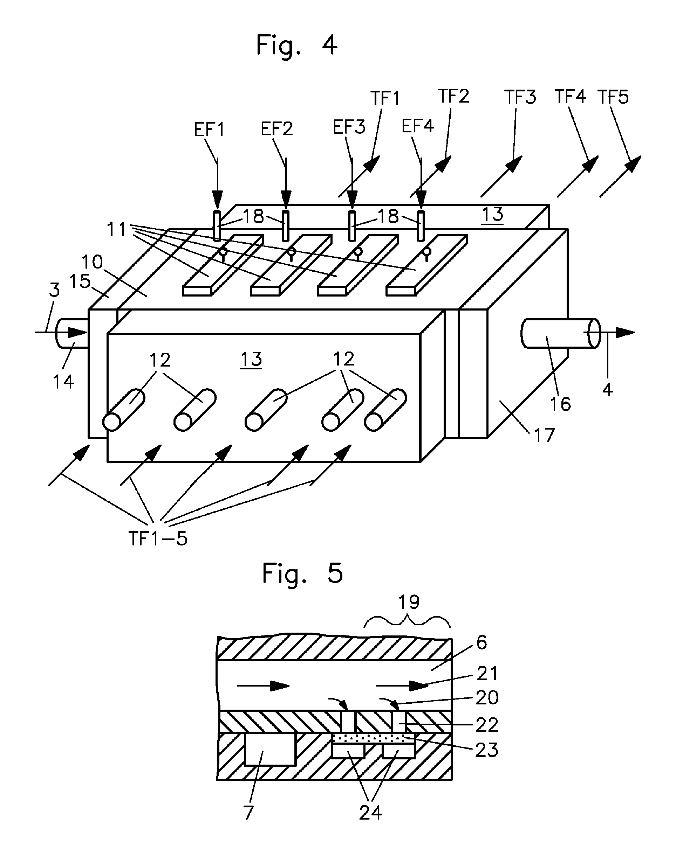

**Fig.2a** **und b** zeigen in Schnittteilansichten Teile von hintereinander angeordneten Temperierungsmodulen (in **Fig.1** und **2a****: T1, T2** und **T3** mit Temperierungsstrecken **TS1, TS2** bzw. **TS3),** Einspeisemodulen (in **Fig.1** und **2a****: E1** und **E2** mit Edukt-Zuführungsstrecken **ES1** und **ES2)** sowie Reaktionsmoduln **R1** und **R2** (in **Fig.1** und **2a** mit Reaktionsstrecken **RS1** und **RS2).** Beide Reaktionsvolumina sind als nach außen hin abgeschlossene Reaktionsmischkammern mit Katalysatorfüllung gestaltet. Diese erstrecken sich über mehrere Ebenen der Temperierungs- und Reaktionsmodulen, wobei die seitlichen Wandungen direkt durch die Schichten des Mikroreaktors gebildet werden. Der obere und untere Abschluss erfolgt durch jeweils eine (nicht dargestellte) Abschlussplatte oder -folie oder durch ein beispielhaft in **Fig.4** dargestelltes Gehäuse. Die Pfeile geben die Strömungsrichtung der Edukte, Teilreaktionsprodukte oder Reaktionsprodukte wieder, wobei die Zuspeisung des zweiten Eduktes in die Kanäle der ersten Passagenfraktion in den gezeigten Beispielen nur von einer Seite (von unten) erfolgt.

**Fig.2a** zeigt beispielhaft eine Ausführung mit hintereinander angeordneten Temperierungs- und Einspeisungsmodul, bei der jeweils ein Temperierungsmodul und ein Einspeisemodul ebenenweise unmittelbar nebeneinander auf denselben Folien oder Platten **5** positioniert sind. Jede Ebene (Platte oder Folie) weist entweder Kanäle nur der ersten Passagenfraktion **6** oder nur quer zu diesen orientierte Temperierungskanäle **7** und Kanäle für die zweite Passagenfraktion **8** auf. Zwischen erster und zweiten Passagefraktion bestehen zudem Übertrittsöffnungen **9,** die ein Übertreten und damit eine Einmischung der zweiten Edukte von der zweiten Passagenfraktion in die erste Passagefraktion ermöglichen. Vorzugsweise weist ein Kanal der zweiten Passagenfraktion je eine Übertrittsöffnung in jeden Kanal der ersten Passagenfraktion auf. Vorzugsweise sind diese auch identisch, sodass in jeden Kanal der ersten Kanalfraktion durch die Übertrittsöffnungen ein vergleichbarer Mengenstrom eingemischt wird. Die Ausführung zeigt zwei Kanäle der zweiten Passagenfraktion, was in vorteilhafter Weise eine getrennte Einmischung zweier verschiedener Edukte ermöglicht. Die Temperierungskanäle **7** sind vorzugsweise orthognal zu den Kanälen der ersten Passagenfraktion **6** orientiert (Kreuzstromprinzip), weisen aber in dieser Ausführung keine fluidische Verbindung zu der ersten und/oder zweiten Passagenfraktion auf.

Eine alternative Ausführung repräsentiert beispielhaft **Fig.2b** mit einer funktionellen Zusammenlegung der Temperierungsmodulen und Einspeisemodulen in eingangs genannter Weise. Die Kanäle der zweiten Passagenfraktion **8** können hier zugleich als Temperierungskanäle **7** dienen. Sie weisen im gezeigten Beispiel allesamt Übertrittsöffnungen **9** zu allen Kanälen der ersten Kanalfraktion **6** auf.

Ferner offenbart **Fig.2c** eine weitere Ausführung, bei dem eine fluidische Kühlung über separate Temperierungskanäle **7** eigene Temperierungsebenen **25** als Zwischenlagen vorgesehen ist.

Weitere, jedoch in **Fig.2a** **oder b** nicht dargestellte Ausführungsbeispiele weisem eine abwechselnde Anordnung von Temperierungskanälen und Kanälen der zweiten Passagenfraktion und /oder eine beidseitige Anordnung von Übertrittsöffnungen in die Kanäle der ersten Passagenfraktion auf (von oben und unten).

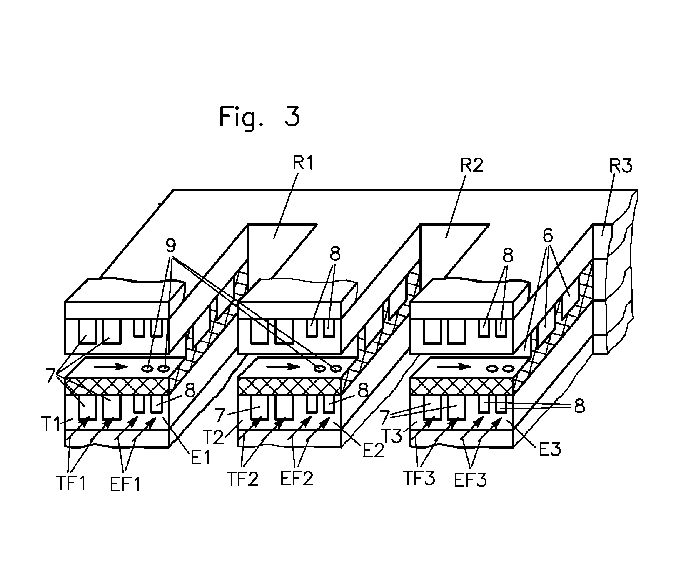

**Fig.3** zeigt eine perspektivische Innenteilschnittansicht des Mikroreaktors in einer Ausführungsform, die der in **Fig.2a** dargestellten Ausführung grundsätzlich ähnelt. Dargestellt ist eine Ebene mit Kanälen der ersten Passagenfraktion **6** sowie zwei an diese angrenzende Ebenen mit Kanälen der Temperierungsmodule **T1** bis **T4** sowie der Einspeisemodule **E1** bis **E4.** Schematisch sind zudem die Einströmungen der Temperierfluidströme **TF1** bis **TF4** sowie der zweiten Eduktströme **EF1** bis **EF4** durch entsprechende Pfeile wiedergegeben, wobei die letztgenannten zweiten Eduktströme über die Kanäle der zweiten Passagenfraktion **8** und die Übertrittsöffnungen **9** in die erste Passagenfraktion eingeleitet werden. Ferner sind in den Kanälen der ersten Passagenfraktion **6** die Fließrichtungen der Edukte, Teilreaktionsprodukte oder Reaktionsprodukte durch Pfeile wiedergegeben (in Richtung der Reaktionsachse gem. **Fig.1****).** Die Reaktionsmodule **R1** bis **R3** sind als Durchbrüche durch den gesamten Folien- oder Plattenstapel gestaltet. Die Durchbrüche werden z.B. mit einer Schüttung mit Katalysatorpartikel gefüllt.

**Fig.4** zeigt perspektivisch ein beispielhaftes Apparatedesign des Gehäuses eines Mikroreaktors der vorgenannten Ausführung. Der Folien- oder Plattenstapel des Mikroreaktors wird wie die Reaktionsmodule durch das Gehäuse **10** eingeschlossen. Die Reaktionsmodule sind je über eine dichtende Abdeckkappe **11** für die Reaktionsvolumina zugänglich. Die Fluidanschlüsse **12** für die Temperierfluide **TF1** bis **TF5** in das und aus dem Gehäuse sind über Temperierfluidverteilungsadapter **13** an den Mikroreaktor angebunden. Die Einleitung für den Eduktstrom 3 von einer Eingangsleitung **14** in die Kanäle der ersten Passagefraktion erfolgt über eine Eintrittsverteiler **15.** In analog umgekehrter Weise wird der Reaktionsproduktstrom **4** von der ersten Passagefraktion zunächst in einer Reaktionsproduktmischkammer **17** zusammengeführt und von dort über die Ausgangsleitung **16** abgeführt. Ferner umfasst das Gehäuse Anschlüsse **18** für die Zuführung der Eduktströme **EF1** bis **EF4.**

Eine weitere vorteilhafte Ausgestaltung des Mikroreaktors zeigt **Fig.5****.** Bei bestimmten chemischen Reaktionen ist es vorteilhaft, schädliche Nebenprodukte oder Teilmengen des entstehenden Reaktionsprodukts aus dem Reaktionsgemisch zu entfernen. Dies ist insbesondere dann sinnvoll, wenn Rückreaktionen der Produkte auftreten und dadurch der erzielbare Umsatzgrad limitiert wird, oder wenn eine Konkurrenzadsorption von Produkten vorliegt. Es wird hierzu ein zusätzliches Abzweigungsmodul **19** vorgeschlagen, das eine Entnahme der genannten Teilmengenströmen **20** aus einem Produktstrom **21** in den Kanälen der ersten Passagefraktion **6** vorsieht. Die Abfuhr erfolgt über Öffnungen **22** sowie eine vorzugsweise metallische Membran **23** in Abfuhrkanäle **24,** wobei die Membran selektiv nur für das schädliche Nebenprodukt durchlässig ist. Alternativ besteht die Trennwand zwischen der ersten Passagenfraktion **6** und den Abfuhrkanälen **24** nur aus dem Membranmaterial. Die Abfuhrkanäle kreuzen vorzugweise ebenenweise alle Kanäle der ersten Passagenfraktion. Für die Abfuhr herrscht über die Membran z.B. eine Partialdruckdifferenz als Triebkraft. Ein Abzweigungsmodul ist vorzugsweise nach einer Temperierung in einem Temperierungsmodul (vgl. Temperierungskanal **7** in **Fig.5****)** nachgeschaltet und/oder einem Reaktionsmodul vorgeschaltet.

### Bezugszeichenliste:

- 1: Reaktionsachse
- 2: Mikroreaktor
- 3: Eduktstrom
- 4: Reaktionsproduktstrom
- 5: Platten, Folien
- 6: Kanal der ersten Passagenfraktion
- 7: Temperierungskanal
- 8: Kanal der zweiten Passagenfraktion
- 9: Übertrittsöffnung
- 10: Gehäuse
- 11: Abdeckkappe
- 12: Fluidanschluss
- 13: Temperierfluidverteilungsadapter
- 14: Eingangsleitung
- 15: Eintrittsverteiler
- 16: Ausgangsleitung
- 17: Reaktionsproduktmischkammer
- 18: Anschluss
- 19: Abzweigungsmodul
- 20: Teilmengenstrom
- 21: Produktstrom
- 22: Öffnung
- 23: Membran
- 24: Abfuhrkanal
- 25: Temperiereungsebene

- Tx (T1 - T5): Temperierungsmodule
- Ex (E1 - E4): Einspeisemodule
- Rx (R1 - R4): Reaktionsmodule
- TSx (TS1 - TS4): Temperierungsstrecken
- ESx (ES1 - ES3): Edukt-Zuführungsstrecken
- RSx (RS1 - RS3): Reaktionsstrecken
- TFx (TF1 - TF5): Temperierungsfluide
- EFx (EF1 - EF4): zweite Edukte

## Patentansprüche

1. Mikroreaktor zur Durchführung mindestens einer katalytischen Reaktion zwischen je zwei oder mehr Reaktanten, umfassend mindestens eine serielle Anordnung eines Einspeisungsmoduls **(Ex),** eines Reaktionsmoduls **(Rx)** sowie eines Temperierungsmoduls **(Tx)** mit Temperierungsmitteln **(TFx)** in der genannten Reihenfolge wobei
a) mindestens eine erste Passagenfraktion **(6)** mit einer Vielzahl paralleler Kanälen für eine erste Fluidfraktion vorgesehen ist, die jedes Einspeise- und Temperierungsmodul **(Ex bzw. Tx)** durchdringt,
b) mindestens eine zweite Passagenfraktion mit Kanälen für mindestens eine zweite Fluidfraktion **(8)** vorgesehen ist, die im Einspeisemodul in die erste Passagenfraktion ausmündet oder abzweigt sowie
c) das Reaktionsmodul als separates Modul und Träger für einen Katalysator als Einschub in den Mikroreaktor gestaltet ist.

2. Mikroreaktor nach Anspruch 1, **dadurch gekennzeichnet, dass** mindestens ein Reaktionsmodul **(Rx)** eine Reaktionsmischkammer zwischen den Kanälen der ersten Passagenfraktion **(6)** aufweist.

3. Mikroreaktor nach Anspruch 1 oder 2, **dadurch gekennzeichnet, dass** mindestens ein Reaktionsmodul im gesamten Volumen direkte Wärmeüberleitungen zu einer Temperierung aufweist.

4. Mikroreaktor nach einem der vorgenannten Ansprüche, **dadurch gekennzeichnet, dass** der Katalysator eine Partikelschüttung aus dem Katalysatormaterial umfasst.

5. Mikroreaktor nach einem der vorgenannten Ansprüche, **dadurch gekennzeichnet, dass** das Reaktionsmodul aus einem Strukturkörper aus Katalysatorvollmaterial oder aus einem mit Katalysator beschichteten Trägermaterial umfasst.

6. Mikroreaktor nach einem der vorgenannten Ansprüche, **dadurch gekennzeichnet, dass** mindestens ein Temperierungsmodul Fluidkanäle für ein Temperierungsfluid aufweisen, welche die Kanäle der ersten Fluidfraktion kreuzen.

7. Mikroreaktor nach einem der vorgenannten Ansprüche, **dadurch gekennzeichnet, dass** die Kanäle in Folien oder Platten eingearbeitet und zu einem Folien- oder Plattenstapel zusammengesetzt sind.

8. Mikroreaktor nach Anspruch 7, **dadurch gekennzeichnet, dass** die Kanäle der ersten Passagenfraktion in einer ersten Folien- oder Plattengruppe und die Kanäle der zweiten Passagenfraktion in einer zweiten Folien- oder Plattengruppe angeordnet und mit Übertrittsöffnungen fluidisch miteinander verbunden sind.

9. Mikroreaktor nach Anspruch 8, **dadurch gekennzeichnet, dass** die ersten und zweiten Folien- oder Plattengruppe in abwechselnder Reihenfolge angeordnet sind.

10. Mikroreaktor nach einem der vorgenannten Ansprüche, **dadurch gekennzeichnet, dass** ein Abzweigungsmodul mit Abfuhrkanälen und einer Membran zu den Kanälen der ersten Passagenfraktion vorgesehen sind.
